# EUROPEAN PATENT APPLICATION

(11) **EP 1 635 136 A2**
(43) Date of publication of application: **15.03.2006**
(21) Application number: 05019420.8
(22) Date of filing: 07.09.2005
(51) Int. Cl.: G01B 5/08

(54) **Device for verifying the dimension of a cylindrical element**

(30) Priority: 10.09.2004 IT BO20040557
(71) Applicant: MI.TE.A. S.p.A., 66010 Fara Filiorum Petri (Chieti) (IT)
(72) Inventor: Falezza, Tommaso, 37057 S. Giovanni Lupatoto (Verona) (IT)
(74) Representative: Dall'Olio, Giancarlo

(57) **Abstract**

Device for verifying the dimension of a cylindrical element includes: means (1) for forming a metallic plate (2) according to a substantially cylindrical shape, to define the cylindrical element (4). A station (5) for measuring the cylindrical element (4) includes a sleeve (7), which is internally coupled with a bush (6), whose inner portion receives the cylindrical element (4) passing therethrough and has a diameter of prefixed value. Holding means (8) are made in the sleeve (7) and the bush (6), to hold the bush (6) in an operation position (O), or to allow the bush (6) to assume a disengaged position (S), due to the interference between the inner surface of the bush (6) and at least a portion of the outer surface of a cylindrical element (4). A sensor (9) detects a possible and sudden dimension change of the elements going out from the sleeve-bush group.

## Description

### DESCRIPTION OF THE INVENTION

The present invention relates to the technical field concerning the processing of metals. In particular, the present invention relates to a device for verifying the dimension of a cylindrical element (or peg).

At present, cylindrical, tubular metallic pegs are produced by cold deformation of a flat plate.

The pegs act as strengthening elements inside heels, especially in woman's shoes.

Once produced, the pegs are situated in a related container, from which they are taken out by a suitable device, which places them inside a die, filled with a suitable natural or synthetic resin, in order to form a shoe heel.

The above device jams, when the crosswise dimension of a peg is bigger than the prefixed value.

This can occur as a result of the wear of the various mechanical means and the surfaces of the dies used for forming the pegs.

The failure of the device for placing the pegs has considerable disadvantages: in particular, if the stop occurs more times during the processing of the same set of pegs, the whole set is rejected and, consequently, returned to the supplier.

It results from what above that the economic damages deriving from the lack of correctness of the crosswise dimension can be considerable, and consequently there is a need to find possible pegs, whose dimension does not correspond to the prefixed parameters, during the production process.

The object of the present invention is to propose a device, which is capable of verifying if the maximum crosswise dimension of a cylindrical element does not exceed the prefixed value.

Another object of the present invention is to propose a device, which allows finding of a peg, whose maximum crosswise dimension does exceed the prefixed parameters, during its production.

A further object of the present invention is to propose a device which assures high reliability and productivity standards in any operation conditions.

Moreover, it is also an object of the present invention that of making a device by a simple, extremely functional and reliable technical solution.

The above mentioned objects are obtained in accordance with the contents of the claims.

The characteristic features of the invention will be pointed out in the following description of a preferred but not exclusive embodiment, with reference to the enclosed figures, in which:
- Figure 1 is a schematic, lateral view of the constructive layout of a machine equipped with the device proposed by the present invention;
- Figure 1A is a section view, taken along I-I of Figure 1, of the proposed machine in two subsequent operation steps;
- Figure 1B is a schematic, section view, taken along II-II of Figure 1, of the proposed machine in two subsequent operation steps;
- Figures 2 and 3 are as many schematic, section views, enlarged with respect to the previous Figures, of the device proposed by the invention, in a first and a second operation condition;
- Figure 4 is a schematic, top view of the proposed device.

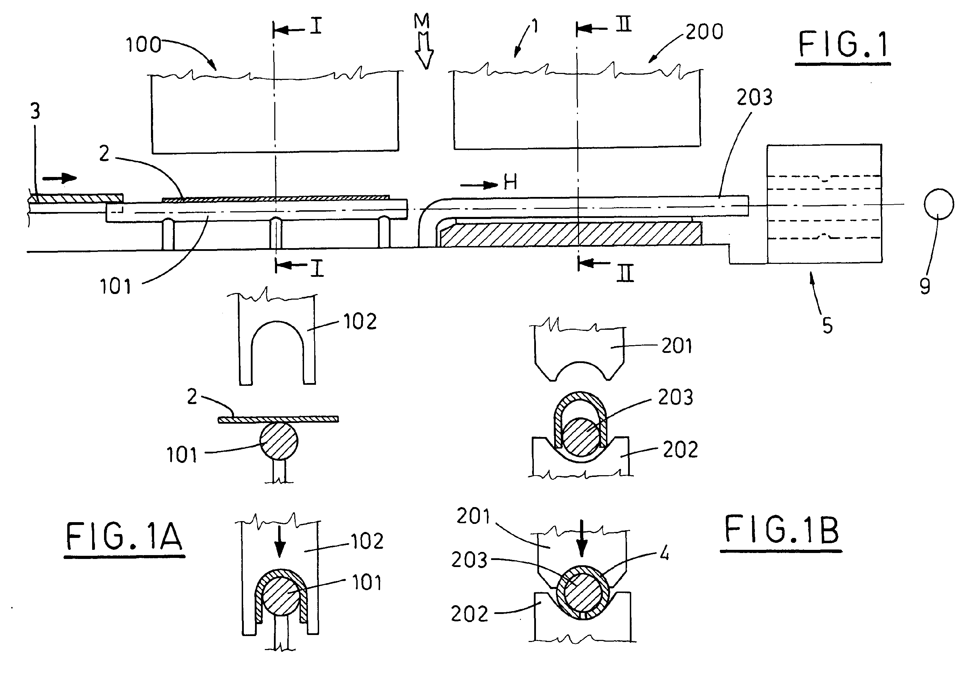

Regards Figures 1, 1A and 1B, the reference M indicates a machine equipped with a first forming station 100 of known type, having a punch 101 and a corresponding die 102, between which a flat metal plate 2 is placed.

The first forming station 100 allows to form the plate 2 according to an overturned "U" shape.

A pusher 3 is connected to the first forming station 100 and allows the previously formed plate to move toward subsequent stations.

A second forming station 200, of known type, installed downstream with respect to the first one, allows to obtain cylindrical, tubular elements 4.

The second forming station 200 has a pair of dies, respectively an upper die 201 and a lower die 202, with a cylindrical core 203 introduced therebetween, and with the overturned "U"-shaped plate placed near the core 203.

A station 5 for verifying the dimension of the cylindrical element 4 is situated downstream of the second forming station 100 (Figures 1, 2, 3).

The measuring station 5 includes a bush 6, which is externally coupled, by holding means 8, with a sleeve 7 provided for receiving it.

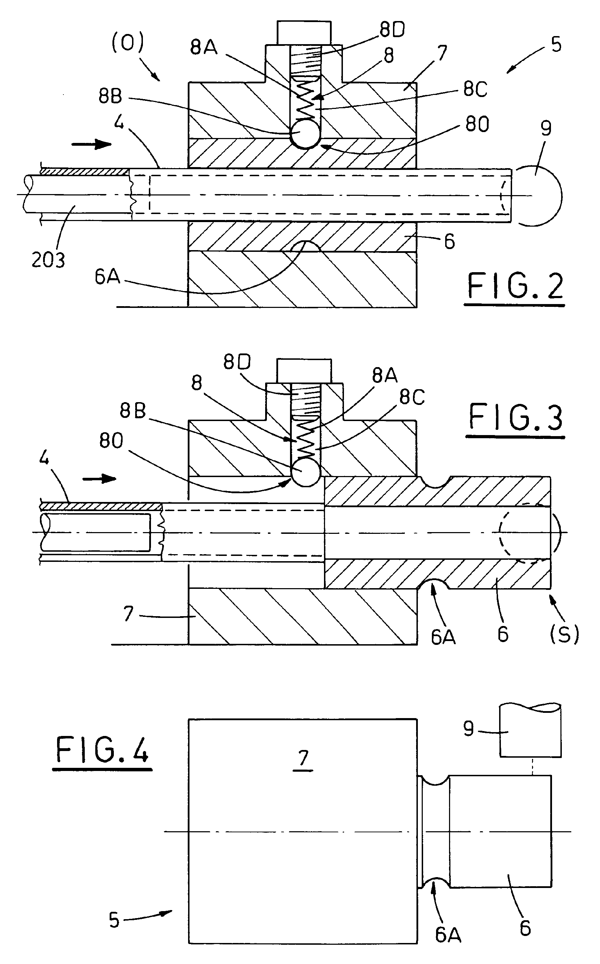

The diameter of the inner portion of the bush 6, aimed at receiving the passing cylindrical, tubular element 4, has a prefixed value and is equal to the maximum crosswise dimension of the latter (Figures 2, 3).

The holding means 8 include a radial seat 8C, made in the sleeve 7 and having a first end 80, which opens in a region corresponding to the portion of the sleeve that touches the bush 6.

Abutment means 8D, situated near a second end of the seat 8C, are connected, by the interposed elastic means 8A, to a ball 8B, protruding at least partially from the seat 8C at the first end 80.

The ball 8B engages with a circumferential groove 8A, made on the outer surface of the above mentioned bush 6 and facing the first end 80.

The bush 6 can take an operation position 0 (Figure 2), if the maximum crosswise dimension of the cylindrical, tubular element 4 is smaller than the above mentioned prefixed value, or it can assume a disengaged position S (Figure 3), if the maximum crosswise dimension of the cylindrical, tubular element 4 exceeds the prefixed value.

A sensor 9, situated downstream of the sleeve 7, is aimed at detecting a possible sudden dimension change of the elements protruding from the group formed by the sleeve and the bush (Figures 1, 2, 3, 4).

The operation of the proposed device will be explained now, although it is easy to understand.

A plate 2 is placed, by known means, in the first forming station 100, in which the die 102 pushes the plate 2 against the punch 101. Thus, the plate 2 is formed according to an overturned "U" shape.

Then, the pusher 3 pushes the just formed plate in the direction indicated with the arrow H, toward the second forming station 200, while a new plate is placed in the first forming station 100.

Simultaneously with the pushing action of the die 102, allowing to form the plate according to the overturned "U" shape, the upper die 201 and the lower die 202 of the second forming station 200 are operated to move close to each other, thus bending the overturned "U"-shaped plate all around the cylindrical core 203 and allowing to obtain a cylindrical, tubular element 4.

If the crosswise dimension of the cylindrical, tubular element 4 is smaller than the above mentioned prefixed value, it passes freely through the bush 6 and the ball 8B remains pushed against the cavity 6A of the spring 8A.

In this case, the holding means 8 allow to hold the bush 6 in the working position O.

Then, the cylindrical, tubular element 4 goes out of the bush 6, and passes in front of the sensor 9, which allows normal operation of the machine M, since it does not detect any dimension change (Figure 2).

If the crosswise dimension of the tubular element 4 exceeds the prefixed value, the passage of the tubular element 4 through the bush 6 is prevented by the interference between the inner surface of the bush 6 and at least a portion of the outer surface of the cylindrical, tubular element 4 (see Figure 3, where reference is made to the case in which the peg goes in abutment against the head of the bush 6).

The above mentioned interference causes the disengagement of the sleeve 7 from the bush 6.

Thus, the bush 6 is moved to the disengaged position S, since the elastic action performed by the spring 8A is won.

Consequently, the bush 6 goes out of the sleeve 7, in the downstream area of the latter.

Then, the bush 6 passes in front of the sensor 9, which detects a sudden dimension change and consequently, disables the machine M.

Advantageously, the proposed device allows to verify if the transversal dimension of a cylindrical element is bigger than a prefixed limit.

Moreover, the proposed device allows to find a possible cylindrical element, whose crosswise dimension is bigger than the above mentioned prefixed value, during the production process.

## Claims

1. Device for verifying the dimension of a cylindrical element, associated to a machine including: means (1) for forming a metallic plate (2) according to a substantially cylindrical shape, to define said cylindrical element (4); pusher means (3) for sending said cylindrical element (4) to the outlet of the machine (M), **characterized in that** it includes: a station (5) for verifying the dimension of said cylindrical element (4), said verifying station (5) including a sleeve (7), which receives a bush (6) coupled thereinside and whose inner portion, for receiving said cylindrical element (4) passing therethrough, has a diameter of prefixed value equal to the maximum crosswise dimension of the cylindrical element; holding means (8), made in said sleeve (7) and said bush (6), for holding said bush (6) in an operation position (O), when the maximum crosswise dimension of the cylindrical element (4) is smaller than said prefixed value, or to allow said bush (6) to assume a disengagement position (S), due to the interference between the inner surface of the bush (6) and at least a portion of the outer surface of a cylindrical element, whose crosswise dimension is bigger than said prefixed value, so as to determine the disengagement of the bush from the sleeve and the going out of the bush downstream of the sleeve (7); a sensor (9), situated downstream of said sleeve (7) for detecting a possible and sudden dimension change of the elements going out from the sleeve-bush group, due to the above disengagement of the bush (6) from the sleeve (7) in the disengagement position (S), and consequently deactivating said machine (M).

2. Device, as claimed in claim 1, **characterized in that** said holding means (8) include: a radial seat (8C), made in said sleeve (7) and having a first end, which opens into the portion of the sleeve, that touches said bush (6); abutment means (8D), connected by interposed elastic means (8A) to a ball (8B), protruding at least partially from said seat (8C), at said end (80), and engaging with a seat (6A), made on the outer surface of said bush (6) and facing said second end of the seat (8C).

3. Device, as claimed in claim 2, **characterized in that** said seat (6A) is a groove.

4. Device, as claimed in claim 1, **characterized in that** said cylindrical element (4) has a tubular shape.
